# EUROPÄISCHE PATENTSCHRIFT

(11) **EP 1 943 118 B1**
(45) Veröffentlichungstag und Bekanntmachung des Hinweises auf die Patenterteilung: **22.09.2010**
(21) Anmeldenummer: 06806452.6
(22) Anmeldetag: 18.10.2006
(51) Int. Cl.: B60H 1/34

(54) **BELÜFTUNGSEINRICHTUNG FÜR EINEN FAHRZEUGINNENRAUM**
VENTILATION DEVICE FOR A VEHICLE INTERIOR
DISPOSITIF DE VENTILATION DESTINE A L'HABITACLE D'UN VEHICULE

(30) Priorität: 21.10.2005 DE 102005050881
(43) Veröffentlichungstag der Anmeldung: 16.07.2008
(73) Patentinhaber: Faurecia Innenraum Systeme GmbH, 76767 Hagenbach (DE)
(72) Erfinder: KOGLER, Mike, 76185 Karlsruhe (DE); CHLYEH, Younes, 76744 Wörth (DE)
(74) Vertreter: Golkowsky, Stefan
(86) Internationale Anmeldenummer: PCT/EP2006/010171
(87) Internationale Veröffentlichungsnummer: WO 2007/045507

(56) Entgegenhaltungen:
- EP-A- 0 717 247
- WO-A-03/091049
- DE-A1- 1 929 827

## Beschreibung

Die Erfindung betrifft eine Belüftungseinrichtung, insbesondere eine Belüftungseinrichtung für einen Kraftfahrzeuginnenraum.

Belüftungseinrichtungen in Kraftfahrzeugen sind grundsätzlich bekannt. Sie werden einerseits zur Belüftung des Innenraums, andererseits auch gegen Beschlagung bzw. Vereisung der Scheiben (DefrostFunktion), vor allem der Scheiben im Frontbereich, eingesetzt. In den Innenraum sind Belüftungseinrichtungen beispielsweise als Bestandteil einer Instrumententafel integriert.

Eine Belüftungsvorrichtung, die sowohl DefrostFunktion beinhaltet sowie eine direkte Belüftung des Innenraums ermöglicht, offenbart die DE 102 19 053 Al.

Diese Belüftungsvorrichtung enthält einen Luftzuführkanal sowie einen Ausströmbereich zur Belüftung des Innenraums. Im Ausströmbereich sind ein erstes und ein zweites Bauteil vorgesehen, welche relativ zueinander in verschiedene Verschiebungszustände bringbar sind. In den unterschiedlichen Verschiebungszuständen liegen jeweils unterschiedliche Schließflächen des ersten und des zweiten Bauteils aneinander an. Dadurch können Luftströmungen in den Innenraum mit unterschiedlichen Ausströmwinkeln realisiert werden.

Vorteilhafterweise sind mindestens zwei Verschiebungszustände einstellbar, wobei im zweiten Verschiebungszustand eine Luftströmung zur Windschutzscheibe hingerichtet ist, und im ersten Verschiebungszustand die Luftströmung stärker zum Zentrum des Fahrzeuginnenraums hingerichtet ist.

Nachteil dieser Belüftungsvorrichtung ist, dass die Luftströmungen zwar grob orientiert werden können, beispielsweise einerseits in Richtung Windschutzscheibe und andererseits in Richtung Zentrum des Innenraums, dass allerdings eine weiterführende Lenkung bzw. Kontrolle der Luftströmung nicht vorhanden ist.

Insbesondere ist es mit solch einer Belüftungsvorrichtung schwierig, einerseits im Randbereich der Scheiben eine genügend hohe Luftströmung zu erzeugen, um Beschlagung zu verhindern bzw. aufzuheben, und andererseits die Luftströmung so in den Innenraum zu richten, dass diese nicht störend auf Fahrer sowie Beifahrer wirkt.

Aufgabe der vorliegenden Erfindung ist es somit, eine Belüftungsvorrichtung zu schaffen, die eine vorteilhafte Ausbildung der Luftströmung bewirkt, insbesondere einerseits für die direkte Belüftung eines Innenraums eines Fahrzeugs und andererseits für die Belüftung einer Windschutzscheibe des Fahrzeugs eingesetzt werden kann.

Diese Aufgabe wird durch eine Belüftungseinrichtung nach dem unabhängigen Anspruch 1 gelöst.

Dadurch, dass das erste Bauteil oder das zweite Bauteil eine erste Lamellenstruktur und das erste Bauteil oder das zweite Bauteil eine zweite, sich von der ersten unterscheidende Lamellenstruktur aufweisen, und im ersten Verschiebungszustand des ersten und des zweiten Bauteils Luft durch die erste Lamellenstruktur ausströmbar ist zur Erzeugung einer ersten Luftströmung mit einem ersten Öffnungswinkel, und im zweiten Verschiebungszustand Luft durch die zweite Lamellenstruktur ausströmbar ist zur Erzeugung einer zweiten Luftströmung mit einem zweiten, sich vom ersten unterscheidendem Öffnungswinkel, können zwei in ihrem Ausströmungsverhalten völlig unterschiedliche Luftströmungen realisiert werden.

Der Öffnungswinkel der Luftströmung wird durch die Orientierung der zu den Lamellenstrukturen gehörendes-Lamellen und der dadurch erzeugten Luftdurchtrittsspalte vorgegeben. Sind die Lamellen einer Lamellenstruktur parallel zueinander orientiert, so ist eine gerichtete, einen vernachlässigenden Öffnungswinkel aufweisende Luftströmung erzeugbar. Sind die Lamellen einer Lamellenstruktur aufgefächert, so ist eine aufgefächerte, einen Öffnungswinkel nach dem Grad der Auffächerung der Lamellen aufweisende Luftströmung erzeugbar.

Die erfindungsgemäße Belüftungseinrichtung kombiniert zwei unterschiedliche Lamellenstrukturen, um zwei unterschiedliche Luftströmungen zu realisieren. Die Lamellen der Lamellenstrukturen sind im jeweiligen Bauteil fest/unbeweglich angeordnet. Eine Mechanik zum Verkippen allein der Lamellen, um die Luftströmung zu ändern, wie beispielsweise bei Seitenausströmern in Instrumententafeln bekannt, ist durch diese Kombination verschiedener fester Lamellenstrukturen nicht mehr notwendig.

Vorteilhafte Weiterbildungen der Erfindung werden in den abhängigen Ansprüchen beschrieben.

Die Erfindung sieht vor, dass die erste Lamellenstruktur zueinander parallel liegende Lamellen aufweist und die zweite Lamellenstruktur fächerartig gegeneinander verkippte Lamellen aufweist, und im ersten Verschiebungszustand des ersten und des zweiten Bauteils Luft durch die erste Lamellenstruktur ausströmbar ist zur Erzeugung einer ersten, gerichteten Luftströmung, und im zweiten Verschiebungszustand Luft durch die zweite Lamellenstruktur ausströmbar ist, zur Erzeugung einer zweiten, aufgefächerten Luftströmung.

Besonders vorteilhaft ist die Anwendung solch einer Belüftungseinrichtung im Innenraum eines Kraftfahrzeugs im Anschluss an eine Windschutzscheibe, insbesondere als Bestandteil einer Instrumententafel. Mit dem aufgefächerten Luftstrom, welcher mittels der Belüftungseinrichtung erzeugt werden kann, lässt sich die Windschutzscheibe in der gesamten Breite ausreichend beströmen. Mit der durch die erste Lamellenstruktur erzeugten gerichteten Luftströmung kann die Luft gezielt in den Innenraum gelenkt werden, ohne einen Fahrer oder Beifahrer zu stören. Insbesondere lässt sich eine erfindungsgemäße Belüftungseinrichtung gegenüber herkömmlichen Belüftungseinrichtungen in einer wesentlich reduzierten Breite einsetzen, ohne Nachteile in der Defrostfunktion mit sich zu bringen.

Unter "fächerartig" soll hier verstanden werden, dass benachbarte Lamellen der zweiten Lamellenstruktur gegeneinander verkippt sind. Der Grad der Verkippung nimmt dabei zum nächsten Nachbarn einer Lamelle, zum übernächsten Nachbarn einer Lamelle, usw. zu. Allerdings soll unter "aufgefächert" auch verstanden werden, wenn nur bestimmte Bereiche der Lamellenstruktur diese Anordnung aufweisen bzw. einzelne Lamellen innerhalb eines derartigen Bereichs nicht diesem Verhalten folgen. Beispielsweise soll eine Lamellenstruktur mit drei benachbarten Bereichen, wobei im mittleren Bereich mehrere Lamellen vorgesehen sind, die in einem ersten Winkel ausgerichtet sind, im linken Randbereich mehrere Lamellen vorgesehen sind, die in einem zweiten, zum ersten Winkel positiv verkippten Winkel angeordnet sind, und im rechten Randbereich ebenfalls mehrere Lamellen vorgesehen sind, die in einem dritten, zum ersten Winkel negativ verkippten Winkel angeordnet sind, ebenfalls unter "fächerartig" verstanden werden.

Des weiteren sollen unter "fächerartig" nur solche Lamellenstrukturen verstanden werden, die eine Auffächerung der Luft mit einem Öffnungswinkel von mindestens 10°, vorzugsweise mindestens 30°, bewirken bzw. deren durch die Lamellen definierte Luftdurchtrittsspalte um einen maximalen Winkel von mindestens 10°, vorzugsweise mindestens 30°, verkippt sind (im Falle einer "gleichmäßigen" Auffächerung wäre dieser Winkel durch die Verkippung der beiden randseitig liegenden Spalten definiert).

Vorzugsweise sind die Lamellen flächige Platten oder Plättchen. Dies ermöglicht große Luftspalte und somit einen hohen Luftdurchtritt durch die Lamellenstrukturen. Alternativ können die Lamellen auch als kompakte, massive Stege ausgeführt sein, deren Seitenflächen derart angewinkelt sind, um eine gerichtete bzw. aufgefächerte Luftströmung zu erzeugen.

Eine weitere vorteilhafte Weiterbildung der Erfindung sieht vor, dass die erste und die zweite Lamellenstruktur gitterförmig sind.

Erfindungsgemäß bevorzugt ist eine Vielzahl von Lamellen vorgesehen, die flächig in mehreren parallelen Reihen in definierten Abständen angeordnet sind.

Eine weitere vorteilhafte Weiterbildung der Erfindung sieht vor, dass in den unterschiedlichen Verschiebungszuständen des ersten und des zweiten Bauteils jeweils unterschiedliche Schließflächen des ersten und des zweiten Bauteils aneinander liegen zur Realisierung eines zusätzlich zur Auffächerung bzw. Richtung unterschiedlichen Ausströmwinkels der Luftströmung.

Gemäß dieser vorteilhaften Weiterbildung ist es möglich, beispielsweise im Falle einer in einer Instrumententafel eingesetzten Belüftungseinrichtung im ersten Verschiebungszustand die gerichtete Luftströmung mehr in den Innenraum des Fahrzeugs zu lenken, und im zweiten Verschiebungszustand die Luftströmung direkt gegen die Windschutzscheibe zu lenken.

Eine weitere vorteilhafte Weiterbildung der Erfindung sieht vor, dass das erste Bauteil und/oder das zweite Bauteil prismatische, vorzugsweise dreieckig, geformte Stege aufweisen bzw. aufweist.

Insbesondere werden durch die Seiten der prismatischen Stege die Ausströmwinkel definiert.

Eine weitere vorteilhafte Weiterbildung der Erfindung sieht vor, dass die prismatisch geformten Stege in einer gemeinsamen Ebene und zueinander parallel angeordnet sind, und sich zwischen zwei benachbarten Stegen hintereinander angeordnet eine erste Lamellenstruktur und eine zweite Lamellenstruktur mit senkrecht zu den parallelen Stegen ausgerichteten Lamellen befinden.

Die Lamellen der zweiten Lamellenstruktur sind somit parallel zu den Stegen aufgefächert.

Vorzugsweise sind die Elemente in der Abfolge Steg - erste Lamellenstruktur - zweite Lamellenstruktur - Steg usw., vorzugsweise innerhalb einer gemeinsamen Ebene, angeordnet.

Mit diesen Merkmalen lässt sich eine besonders flache und kompakte Bauform realisieren.

Unter dem Begriff "Ebene" soll in diesem Zusammenhang auch eine leicht gekrümmte Fläche zu verstehen sein, beispielsweise die leicht gebogene Fläche eines sich an eine Windschutzscheibe anschließenden Teils der Oberfläche einer Instrumententafel.

Eine weitere vorteilhafte Weiterbildung der Erfindung sieht vor, dass das erste Bauteil und/oder das zweite Bauteil Nuten oder Aussparungen aufweisen bzw. aufweist, in denen die Lamellen der ersten und/oder der zweiten Lamellenstruktur des anderen Bauteils zumindest teilweise geführt werden.

Hierdurch kann insbesondere sichergestellt werden, dass sich erstes.Bauteil und zweites Bauteil ausschließlich entlang eines vorgegebenen Weges gegeneinander verschieben lassen.

Eine weitere vorteilhafte Weiterbildung der Erfindung sieht vor, dass ein drittes Bauteil vorgesehen ist, welches zum Verschließen des Ausströmbereichs unabhängig von den Bewegungszuständen des ersten und des zweiten Bauteils beweglich ist.

Alternativ lässt sich auch durch Ausbildung von Schließflächen am ersten und/oder am zweiten Bauteil ein dritter Verschiebungszustand realisieren, in dem der Ausströmbereich verschlossen ist.

Die Erfindung wird nun anhand eines Ausführungsbeispiels einschließlich mehrerer Figuren erläutert. Dabei zeigt
- Fig. 1: ein erfindungsgemäßes erstes Bauteil, hier ausgebildet als Blende, und ein erfindung- gemäßes zweites Bauteil, hier ausgebildet als Prismengitter,
- Fig. 2: die Unterseite der Blende,
- Fig. 3: die Unterseite der Blende mit eingesetztem Prismengitter,
- Fig. 4: die Belüftungseinrichtung im ersten Ver- schiebungszustand,
- Fig. 5: die Belüftungseinrichtung im zweiten Ver- schiebungszustand,
- Fig. 6: die erfindungsgemäße Belüftungseinrichtung integriert in einer Instrumententafel eines Fahrzeugs im ersten Verschiebungszustand,
- Fig. 7: die erfindungsgemäße Belüftungseinrichtung, integriert in einer Instrumententafel eines Fahrzeugs im zweiten Verschiebungszustand mit einer aufgefächerten Luftströmung,
- Fig. 8: eine schematische Querschnittsansicht einer erfindungsgemäßen Belüftungseinrichtung im ersten Verschiebungszustand, und
- Fig. 9: eine schematische Querschnittsansicht einer erfindungsgemäßen Belüftungseinrichtung im zweiten Verschiebungszustand.

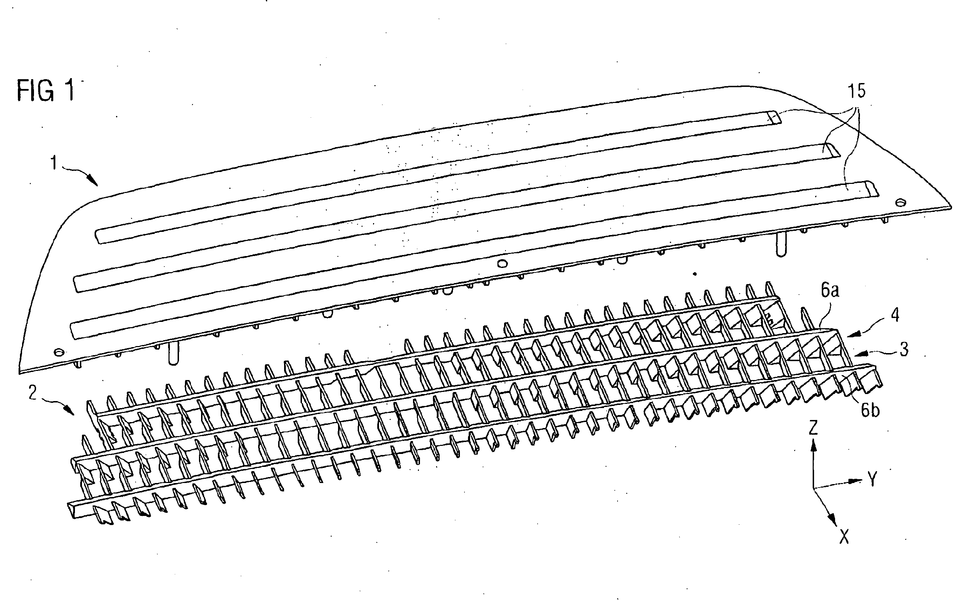

Fig. 1 zeigt ein zu einer erfindungsgemäßen Belüftungseinrichtung gehörendes erstes Bauteil und zweites Bauteil, in diesem Ausführungsbeispiel ausgebildet als Blende 1 bzw. Prismengitter 2.

Die Blende 1 ist in Fig. 1 in einer Aufsicht auf die Sichtseite gezeigt. Sie ist als flächiges, längliches Element ausgebildet mit drei zueinander parallel verlaufenden rechteckförmigen länglichen Lüftungsschlitzen 15. Material der Blende 1 ist Kunststoff.

Das Prismengitter 2 ist ebenfalls in einer Aufsicht gezeigt. Entsprechend der Blende 1 ist das Prismengitter 2 als längliches, flächiges Bauteil ausgebildet.

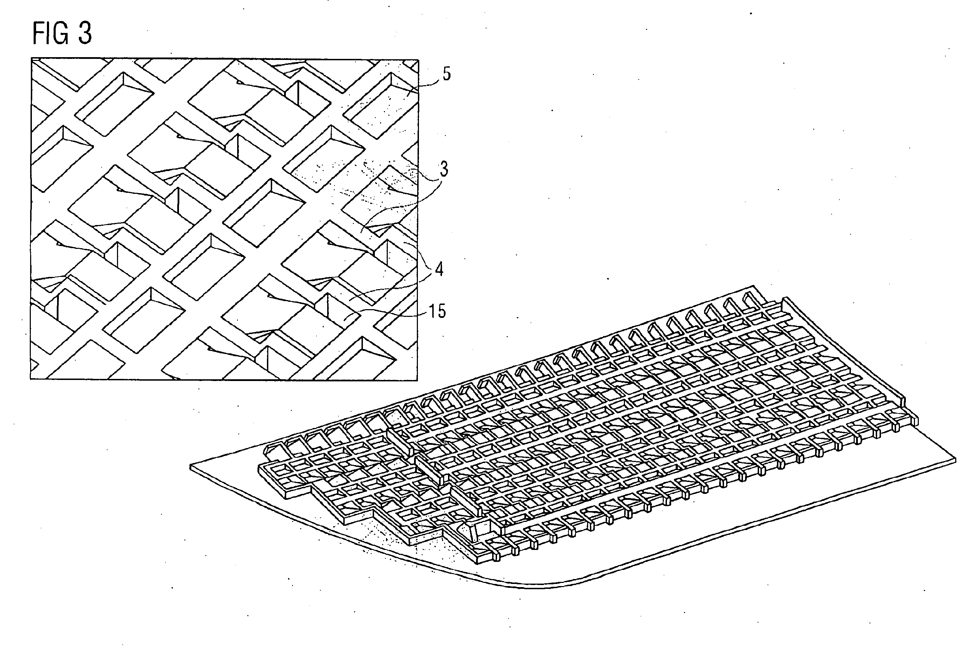

Das Prismengitter 2 weist drei in einer gemeinsamen Ebene und zueinander parallel angeordnete längliche Stege 5 auf. Die Stege 5 besitzen in ihrem Querschnitt (XZ-Ebene) eine prismatische Form, in diesem Ausführungsbeispiel eine Dreiecksform. Zusätzlich sind die Stege 5 rückseitig ausgehöhlt (siehe Figur 3).

Zwischen den Stegen 5 befinden sich jeweils hintereinander angeordnet (X-Richtung) eine erste Lamellenstruktur 3 und eine zweite Lamellenstruktur 4. Auch an den Außenseite der beiden äußersten Stege 5 ist jeweils eine Lamellenstruktur 3 bzw. 4 vorgesehen.

Die erste Lamellenstruktur 3 und die zweite Lamellenstruktur 4 bestehen in diesem Falle aus einer Vielzahl von gitterförmig, nebeneinander mit definierten Abständen angeordneten Lamellen. Die Lamellen selbst sind als flächige Plättchen ausgebildet. Dabei sind die Lamellen der ersten Lamellenstruktur 3 parallel (XZ-Ebene) zueinander ausgerichtet. Die zweite Lamellenstruktur 4 hingegen weist fächerartig gegeneinander verkippte Lamellen auf.

In diesem Ausführungsbeispiel ist die Auffächerung der Lamellen der zweiten Lamellenstruktur 4 so gewählt, dass die sich in der Mitte des Prismengitters 2 befindenden Lamellen in einer gemeinsamen Ebene (XZ-Ebene) mit den Lamellen der ersten Lamellenstruktur 3 angeordnet sind, allerdings die benachbarten Lamellen der Lamellenstruktur 4, von der Mitte des Prismengitters 2 nach außen gehend (Y-Richtung), mit einem positiven bzw. negativen Winkel immer stärker um die X-Achse verkippt sind. Der maximale Winkel, mit denen die jeweils äußersten Lamellen der zweiten Lamellenstruktur 4 gegeneinander verkippt sind, beträgt in diesem Ausführungsbeispiel etwa 70°. Dieser Winkel ist natürlich vom Einsatzzweck abhängig, kann also breit variieren.

In dem Prismengitter 2 sind die Lamellen der ersten Lamellenstruktur 3 und der zweiten Lamellenstruktur 4 insbesondere senkrecht (YZ-Ebene) zu den parallelen Stegen 5 ausgerichtet.

Material des Prismengitters ist ebenfalls Kunststoff.

Alternativ kann als Material für Blende 1 und Prismengitter 2 auch Metall bzw. eine Kombination von Metall und Kunststoff eingesetzt werden.

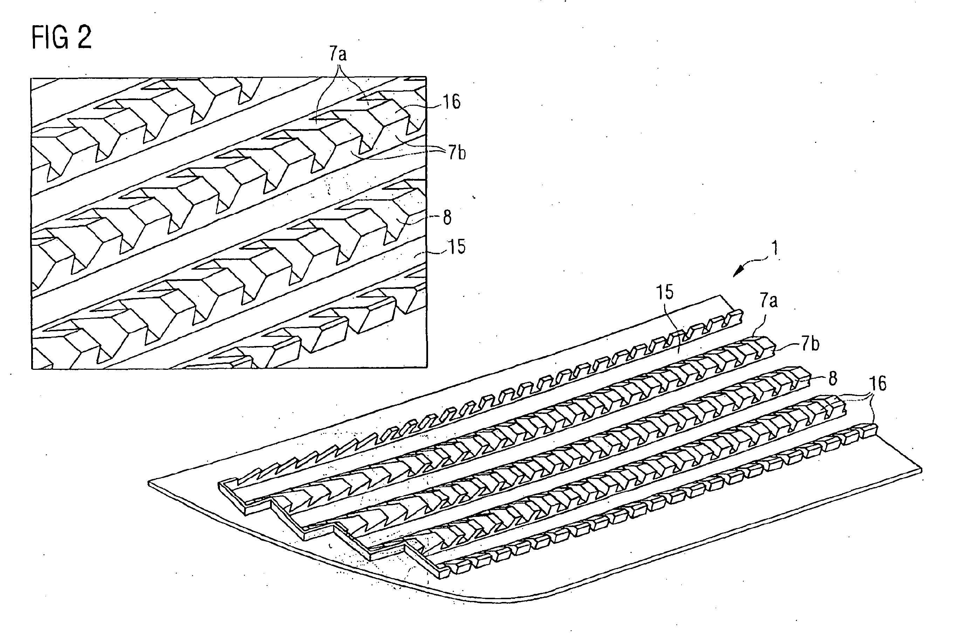

Fig. 2 zeigt die Unterseite der Blende 1.

Die Unterseite der Blende 1 weist, im Gegensatz zu der flachen sichtseitigen Oberseite, eine gitterartige Struktur auf. Die Struktur der Unterseite der Blende 1 besteht aus einer Vielzahl von Klötzchen 16. Diese Klötzchen 16 sind einstückig an die Blende 1 angeformt.

Diese gitterartige Struktur ist so ausgebildet, dass in dieser das Prismengitter 2 aufgenommen und geführt werden kann. Die Höhe der Struktur stimmt dabei in etwa mit der Höhe des Prismengitters 2 überein. Des Weiteren weist die Struktur der Unterseite der Blende 1 Aussparungen 8 auf, in denen die Lamellen der ersten Lamellenstruktur 3 und der zweiten Lamellenstruktur 4 geführt werden, siehe hierzu Fig. 3. Insbesondere ermöglicht es diese Struktur der Blende 1, das in dieser Struktur angeordnete Prismengitter 2 in einen ersten Verschiebungszustand zu bringen, in denen die Lamellen der erste Lamellenstruktur 3 sich unterhalb der Lüftungsschlitze 15 befinden, und das Prismengitter durch Verschieben in einen zweiten Verschiebungszustand zu bringen, in dem die Lamellen der Lamellenstruktur 4 unterhalb der Lüftungsschlitze 15 angeordnet sind.

Wie in Fig. 3 zu sehen ist, befindet sich im Regelfall zwischen benachbarten Lamellen jeweils ein Klötzchen. 16. Die Klötzchen 16 füllen, bis auf die Aussparung 8, die für die Führung der Lamellen benötigt wird, einen Großteil des Volumens zwischen den Stegen aus, so dass Luft direkt durch die Lüftungs-schlitze 15 geleitet werden kann, ohne sich innerhalb der Struktur zu stark zu verwirbeln.

Des Weiteren sind die benachbart zu den Lüftungsschlitzen 15 liegenden Seitenflächen 7a und 7b der Klötzchen 16 in Abstimmung mit den Seitenflächen 6a und 6b der Stege 5 des Prismengitters 2 ausgebildet, so dass im ersten und im zweiten Verschiebungszustand jeweils unterschiedliche Schließflächen 6a und 7a bzw. 6b und 7b der Klötzchen 16 und der Stege 5 aneinander liegen, wodurch zusätzlich zur durch die Anordnung der Lamellen bewirkten Auffächerung bzw. Richtung ein unterschiedlicher Ausströmwinkel der Luftströmung erzeugt werden kann. Dieses Prinzip wird zu einem späteren Zeitpunkt näher erläutert.

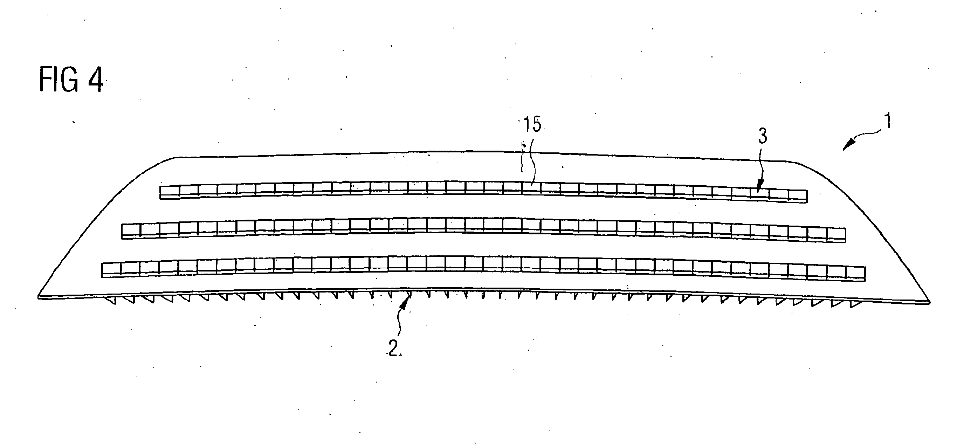

Fig. 4 zeigt eine erfindungsgemäße Belüftungseinrichtung in einem ersten Verschiebungszustand. Allerdings beschränkt sich die Darstellung auf die Belüftungskassette, bestehend aus der Blende 1 und den unterhalb der Blende 1 angeordneten Prismengitter 2. Der Luftzuführkanal und der Ausströmbereich, die hier nicht dargestellt sind, liegen unterhalb des Prismengitters 2. Durch den Luftzuführkanal kann Luft in den Ausströmbereich geleitet werden und von dort durch die aus Blende 1 und Gitter 2 bestehende Belüftungskassette, die über dem Ausströmbereich angeordnet ist, hindurchtreten. Als Luftzuführkanal und Ausströmbereich können beliebige, insbesondere in der Automobilindustrie, verwendete Systeme eingesetzt werden.

In Fig. 4 ist gut zu erkennen, dass sich ausschließlich die ersten Lamellenstrukturen 3 unterhalb der Lüftungsschlitze 15 befinden. Strömt Luft durch diese Belüftungskassette wird somit eine erste, gerichtete Luftströmung 13 erzeugt.

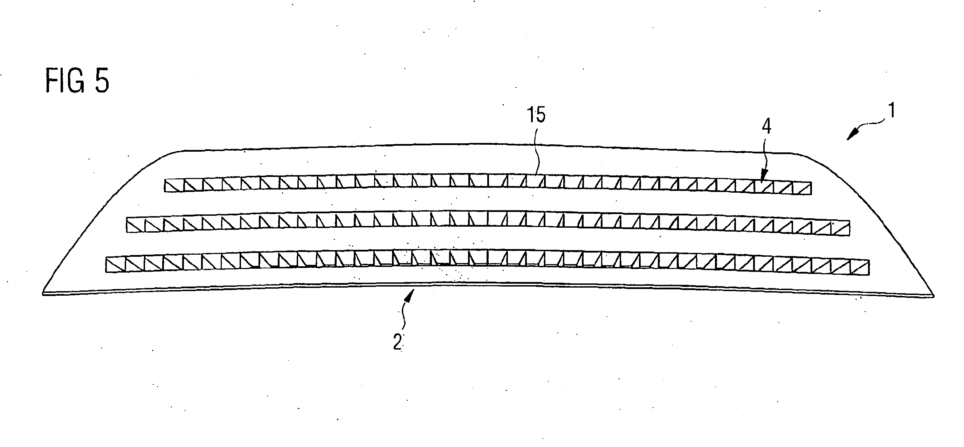

Fig. 5 zeigt die Belüftungseinrichtung im zweiten Verschiebungszustand.

In diesem Verschiebungszustand befinden sich nur die zweite Lamellenstrukturen 4 mit ihren aufgefächerten Lamellen unterhalb der Lüftungsschlitze 15 der Blende 1. Wird Luft durch die Belüftungskassette geströmt, wird eine zweite, aufgefächerte Luftströmung erzeugt.

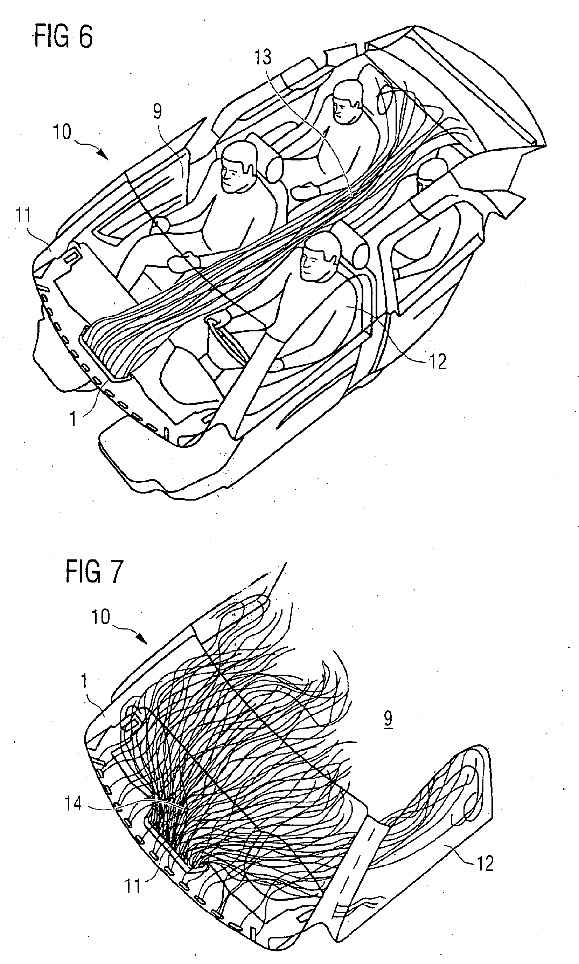

Fig. 6 zeigt eine erfindungsgemäße Belüftungseinrichtung integriert in eine Instrumententafel eines Fahrzeugs im ersten Verschiebungszustand.

In diesem Ausführungsbeispiel ist die erfindungsgemäße Belüftungseinrichtung (genauer: die Blende 1), im Anschluss an eine Windschutzscheibe 11 angeordnet. Die Blende 1 nimmt dabei bezüglich ihrer Abmaße das mittlere Drittel der Oberfläche der Instrumententafel in Anspruch.

Wie in Fig. 6 zu sehen, wird durch die erfindungsgemäße Belüftungseinrichtung eine erste Luftströmung 13 erzeugt, welche direkt in den Innenraum 9 des Fahrzeugs 10 gerichtet ist. Der Winkel, unter dem die Luft ausströmt, ist dabei so gewählt, dass die Luftströmung 13 im Wesentlichen gerichtet zwischen einem Fahrer und einem Beifahrer hindurchtreten kann. Der Öffnungswinkel der Luftströmung 13, der durch die Lamellen der ersten Lammellenstruktur 3 vorgegeben ist, ist vernachlässigbar klein.

Fig. 7 zeigt eine erfindungsgemäße Belüftungseinrichtung integriert in einer Instrumententafel eines Fahrzeugs im zweiten Verschiebungszustand.

In diesem Ausführungsbeispiel ist die Belüftungskassette mit der Blende und dem Prismengitter 2 so ausgebildet, dass im zweiten Verschieburigszustand eine aufgefächerte Luftströmung erzeugt wird, die, im Gegensatz zur im ersten Verschiebungszustand erzeugten ersten Luftströmung 13, direkt gegen die Windschutzscheibe 11 des Fahrzeugs 10 gelenkt wird. Durch die Auffächerung der Luftströmung wird insbesondere bewirkt, dass die gesamte Frontscheibe 11 erfasst wird, wodurch ein vollständiger Defrost erreicht wird. Der Öffnungswinkel der Luftströmung, der durch die Lamellen der Lamellenstruktur 14 vorgegeben ist, beträgt etwa 70°.

Alternativ zu der hier beschriebenen Ausführungsform einer erfindungsgemäßen Belüftungseinrichtung können insbesondere auch beide Lammellenstrukturen 3 und 4 aufgefächert sein. Beispielsweise kann auf diese Weise in Analogie zum obigen Beispiel in einem ersten Verschiebungszustand eine Luftströmung realisiert werden, die zwar direkt in den Fahrzeuginnenraum hinein gerichtet ist, die allerdings leicht aufgefächert ist, also einen kleinen Öffnungswinkel aufweist, und somit auch einen Fahrer und einen Beifahrer leicht beströmen würde.

Des Weiteren können zusätzliche weitere Lamellenstrukturen in einer erfindungsgemäßen Belüftungseinrichtung integriert sein.

Im Folgenden soll näher erläutert werden, wie sich im ersten und zweiten Verschiebungszustand Luftströmungen mit unterschiedlichen Ausströmwinkeln erzeugen lassen.

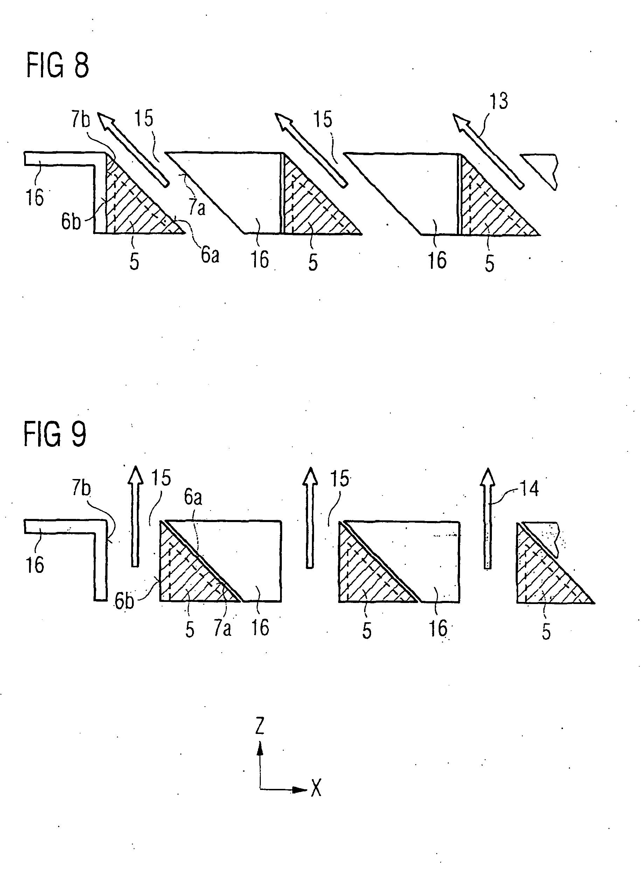

Hierzu zeigt Fig. 8 eine schematische Querschnittsansicht einer erfindungsgemäßen Belüftungseinrichtung im ersten Verschiebungszustand.

Gezeigt sind allerdings nur die Klötzchen 16 der Struktur der Unterseite der Blende 1 und die Stege 5 des Prismengitters 2. Die Ebene des Querschnitts ist die XZ-Ebene, vergl. Fig. 1.

Im ersten Verschiebungszustand liegt eine zweite Seitenfläche 6b eines Stegs 5 an einer zweiten Seitenfläche 7b eines Klötzchens 16. Zwischen einer ersten Seitenfläche 6a des Stegs 5 und einer dieser Seitenfläche 6a gegenüberliegenden ersten Seitenfläche 7a des benachbarten Klötzchens 16 ist ein Spalt entstanden, durch den Luft geströmt werden kann. Die Orientierung der Seitenflächen 7a des Klötzchens 16 und 7b des Stegs 5 definieren dabei die Form des Luftkanals und somit auch den Ausströmwinkel der Luft. In diesem Ausführungsbeispiel sind die Seitenflächen 6a und 7a so ausgebildet, dass eine Luftströmung mit einem Ausströmwinkel von 45° bezüglich der Z-Achse erzeugt wird.

Durch Verschieben des Prismengitters 2 lassen sich die Stege 5 in den zweiten Verschiebungszustand bringen.

Fig. 9 zeigt eine schematische Querschnittsansicht (XZ-Ebene) einer erfindungsgemäßen Belüftungseinrichtung im zweiten Verschiebungszustand.

Im zweiten Verschiebungszustand liegt eine erste Seitenfläche 6a eines Stegs 5 auf den ersten Seitenflächen 7a eines Klötzchens 16. Zwischen der zweiten Seitenfläche 6b des Stegs 5 und der zweiten Seitenfläche 7b des benachbarten Klötzchens 16 ist dadurch ein Spalt erzeugt worden, durch den Luft ausströmbar ist. Die Form des Spalts ist dabei durch die Geometrie der Seitenflächen 6b und 7b gegeben. In diesem Falle sind die Seitenflächen 6b und 7b so ausgebildet, dass ein zur Z-Richtung paralleler Spalt ausgebildet wird, durch den sich eine im Wesentlichen zur Z-Richtung parallele Luftströmung erzeugen lässt.

In diesem Ausführungsbeispiel sind die Stege 5 in ihrem Querschnitt dreieckförmig und die Klötzchen 16 viereckig. Grundsätzlich lassen sich hier auch andere Formen, beispielsweise Stege mit viereckigem und Klötzchen mit dreieckigem Querschnitt sowie auch grundverschiedene Formen, einsetzen.

Neben der hier gezeigten Blende 1 und Prismengitter 2 kann die Belüftungseinrichtung auch ein drittes Bauteil enthalten, mit welchem die Lüftungsschlitze 15 der Blende 1 schließbar sind. Eine mögliche Ausführungsform eines derartigen Bauteils wäre ein flächiges Element mit den Lüftungsschlitzen 15 in ihren Abmaßen entsprechenden geschlossenen Flächen 15, welche sich durch Verschiebung in Deckung mit den Lüftungsschlitzen 15 bringen lassen.

Alternativ ist es auch möglich, eine derartige Funktion im Prismengitter 2 zu integrieren. Beispielsweise könnte zwischen den Stegen 5 eine geschlossene Fläche vorgesehen werden, die sich durch Verschieben des Prismengitters 2 in Deckung mit den Lüftungsschlitzen 15 bringen lässt.

## Patentansprüche

1. Belüftungseinrichtung, die in einem Fahrzeuginnenraum anordenbar ist, wobei die Orientierung von Teilen dieser Belüftungseinrichtung in einem Rechtskoordinatensystem beschreibbar (x, y, z) ist, mit einem Luftzuführkanal sowie einem Ausströmbereich, wobei im Ausströmbereich ein erstes und ein zweites Bauteil (1, 2) vorgesehen sind, welche relativ zueinander durch Verschiebung in X-Richtung in zumindest einen ersten Verschiebungszustand und in einen zweiten Verschiebungszustand bringbar sind zur Realisierung von zumindest einer unterschiedlichen ersten Luftströmung (13) und einer zweiten Luftströmung (14), **dadurch gekennzeichnet, dass** mindestens eines der beiden Bauteile eine erste Lamellenstruktur (3) mit zueinander parallel liegenden Lamellen sowie eine zweite, sich von der ersten unterscheidende Lamellenstruktur (4) mit fächerartig gegeneinander verkippten Lamellen aufweist, so dass im ersten Verschiebungszustand Luft durch die erste Lamellenstruktur ausströmbar ist zur Erzeugung einer ersten, gerichteten Luftströmung (13) in der X-Z-Ebene, und im zweiten Verschiebungszustand Luft durch die zweite Lamellenstruktur.ausströmbar ist zur Erzeugung einer zweiten Luftströmung (14), die mit verschiedenen Y-Komponenten aus der X-Z-Ebene heraus aufgefächert ist.

2. Belüftungseinrichtung nach Anspruch 1, **dadurch gekennzeichnet, dass** die erste und die zweite Lamellenstruktur (3, 4) gitterförmig sind.

3. Belüftungseinrichtung nach einem der vorhergehenden Ansprüche, **dadurch gekennzeichnet, dass** in den unterschiedlichen Verschiebungszuständen des ersten und des zweiten Bauteils (1, 2) jeweils unterschiedliche Schließflächen (6a, 6b, 7a, 7b) des ersten und des zweiten Bauteils aneinanderliegen zur Realisierung eines zusätzlich zur Auffächerung unterschiedlichen Ausströmwinkels der Luftströmung (13, 14):

4. Belüftungseinrichtung nach Anspruch 3, **dadurch gekennzeichnet, dass** das erste Bauteil und/oder das zweite Bauteil (1, 2) prismatisch, vorzugsweise dreieckig, geformte Stege (5) aufweisen bzw. aufweist .

5. Belüftungseinrichtung nach einem der Ansprüche 3 oder 4, **dadurch gekennzeichnet, dass** die prismatisch geformten Stege (5) in einer gemeinsamen Ebene und zueinander parallel angeordnet sind, und sich zwischen zwei benachbarten Stegen (5) hintereinander angeordnet eine erste Lamellenstruktur (3) und eine zweite Lamellenstruktur (4) mit senkrecht zu den parallelen Stegen (5) ausgerichteten Lamellen befinden.

6. Belüftungseinrichtung nach einem der vorhergehenden Ansprüche, **dadurch gekennzeichnet, dass** das erste Bauteil und/oder das zweite Bauteil, Nuten oder Aussparungen (8) aufweisen bzw. aufweist, in denen die Lamellen der ersten und/oder der zweiten Lamellenstruktur (3, 4) des anderen Bauteils zumindest teilweise geführt werden.

7. Belüftungseinrichtung nach einem der vorhergehenden Ansprüche, **dadurch gekennzeichnet, dass** ein drittes Bauteil vorgesehen ist, welches zum Verschließen des Ausströmbereichs unabhängig von den Bewegungszuständen des ersten und des zweiten Bauteils beweglich ist.

8. Belüftungseinrichtung nach einem der vorhergehenden Ansprüche, **dadurch gekennzeichnet, dass** der Ausströmbereich im Innenraum (9) eines Kraftfahrzeugs (10) anordenbar ist und sich dort an eine Windschutzscheibe (11) anschließt.

9. Belüftungseinrichtung nach Anspruch 8 in Verbindung mit Anspruch 2, **dadurch gekennzeichnet, dass** im ersten Verschiebungszustand die Luftströmung (13) zum Zentrum des Fahrzeuginnenraums (9) hin gerichtet ist und im zweiten Verschiebungszustand die Luftströmung (14) zur Windschutzscheibe (11) hin gerichtet ist.

10. Belüftungseinrichtung nach einem der vorhergehenden Ansprüche, **dadurch gekennzeichnet, dass** das erste, zweite und/oder dritte Bauteil (1, 2) aus Kunststoff oder Metall sind.

11. Verkleidungsteil mit einer Belüftungseinrichtung nach einem der vorhergehenden Ansprüche.

## Claims

1. A ventilation device which may be arranged in a vehicle interior, wherein the orientation of parts of this ventilation device may be described in a Cartesian coordinate system (x, y, z), with an air supply channel as well as an outflow region, wherein a first and second component (1, 2) are provided in the outflow region, which may be brought relative to one another by way of displacement in the x-direction, into at least one first displacement condition and into a second displacement condition, for realising at least one different first air flow (13) and a second air flow (14), **characterised in that** at least one of the two components comprises a first lamella structure (3) with lamellae lying parallel to one another, as well as a second lamella structure (4) which is different to the first one, with lamellae which are tilted to one another in the manner of a fan, so that in the first displacement condition, air may flow out through the first lamella structure for producing a first, directed air flow (13) in the X-Z plane, and in the second displacement condition, air may flow out through the second lamella structure for producing a second air flow (14), which is fanned out of the X-Z plane with different Y-components.

2. A ventilation device according to claim 1, **characterised in that** the first and the second lamella structure (3, 4) are grid-like.

3. A ventilation device according to one of the preceding claims, **characterised in that** in each case different closure surfaces (6a, 6b, 7a, 7b) of the first and the second component bear on one another in the different displacement conditions of the first and second component (1, 2), for realising a different outflow angle of the air flow (13, 14), additionally to the fanning out.

4. A ventilation device according to claim 3, **characterised in that** the first component and/or the second component (1, 2) has or have prismatically shaped, preferably triangularly shaped webs (5).

5. A ventilation device according to claim 3 or 4, **characterised in that** the prismatically shaped webs (5) are arranged in a common plane and parallel to one another, and a first lamella structure (3) and a second lamella structure (4) with lamellae aligned perpendicular to the parallel webs (5), are located arranged behind one another between two adjacent webs (5).

6. A ventilation device according to one of the preceding claims, **characterised in that** the first component and/or the second component comprises or comprise grooves or recesses (8), in which the lamellae of the first and/or the second lamella structure (3, 4) of the other component are at least partly led.

7. A ventilation device according to one of the preceding claims, **characterised in that** a third component is provided, which is movable for closing the outflow region independently of the movement conditions of the first and second component.

8. A ventilation device according to one of the preceding claims, **characterised in that** the outflow region may be arranged in the interior (9) of a motor vehicle (10) and there connects to a windshield (11).

9. A ventilation device according to claim 8 in combination with claim 2, **characterised in that** in the first displacement condition, the air flow (13) is directed towards the centre of the vehicle interior (10) and in the second displacement condition, the air flow (14) is directed towards the windshield (11).

10. A ventilation device according to one of the preceding claims, **characterised in that** the first, second and/or third component (1, 2) are of plastic or metal.

11. A trim part with a ventilation device according to one of the preceding claims.

## Revendications

1. Dispositif d'aération qui peut être disposé à l'intérieur d'un véhicule, l'orientation de parties de ce dispositif d'aération pouvant être décrite dans un système de coordonnées à droite (x, y, z), comprenant un conduit d'arrivée d'air et une zone d'évacuation, un premier et un second composants (1, 2) étant prévus dans la zone d'évacuation, lesquels peuvent être amenés l'un par rapport à l'autre par déplacement dans la direction X dans au moins un premier état de déplacement et dans un second état de déplacement pour la réalisation d'au moins un premier écoulement d'air (13) différent et d'un second écoulement d'air (14), **caractérisé en ce qu'**au moins l'un des deux composants présente une première structure de lamelles (3) avec des lamelles disposées parallèlement entre elles et une seconde structure de lamelles (4) se différenciant de la première avec des lamelles basculées les unes par rapport aux autres à la façon d'un éventail de sorte que, dans le premier état de déplacement, de l'air peut s'évacuer par la première structure de lamelles pour générer un premier écoulement d'air (13) dirigé dans le plan X-Z, et, dans le second état de déplacement, de l'air peut être évacué par la seconde structure de lamelles pour générer un second écoulement d'air (14), qui est réparti à la façon d'un éventail avec différents composants Y à partir du plan X-Z.

2. Dispositif d'aération selon la revendication 1, **caractérisé en ce que** la première et la seconde structures de lamelles (3, 4) sont en forme de grille.

3. Dispositif d'aération selon l'une quelconque des revendications précédentes, **caractérisé en ce que**, dans les différents états de déplacement du premier et du second composants (1, 2), à chaque fois différentes surfaces de fermeture (6a, 6b, 7a, 7b) du premier et du second composants sont disposées les unes contre les autres pour réaliser un angle d'évacuation de l'écoulement d'air (13, 14) qui est différent en supplément pour la répartition en éventail.

4. Dispositif d'aération selon la revendication 3, **caractérisé en ce que** le premier composant et/ou le second composant (1, 2) présente(nt) des barrettes (5) formées de façon prismatique, de préférence triangulaire.

5. Dispositif d'aération selon l'une quelconque des revendications 3 ou 4, **caractérisé en ce que** les barrettes (5) formées de façon prismatique sont disposées dans un plan commun et parallèlement entre elles, et une première structure de lamelles (3) et une seconde structure de lamelles (4) avec des lamelles orientées perpendiculairement aux barrettes (5) parallèles se trouvent disposées les unes derrières les autres entre deux barrettes (5) voisines.

6. Dispositif d'aération selon l'une quelconque des revendications précédentes, **caractérisé en ce que** le premier composant et/ou le second composant présente(nt) des rainures ou des évidements (8), dans lesquels les lamelles de la première et/ou de la seconde structure de lamelles (3, 4) de l'autre composant sont guidées au moins partiellement.

7. Dispositif d'aération selon l'une quelconque des revendications précédentes, **caractérisé en ce qu'**il est prévu un troisième composant qui est mobile pour la fermeture de la zone d'évacuation, indépendamment des états de mouvement du premier et du second composants.

8. Dispositif d'aération selon l'une quelconque des revendications précédentes, **caractérisé en ce que** la zone d'évacuation peut être disposée à l'intérieur (9) d'un véhicule (10) et se raccorde ici à un pare-brise (11).

9. Dispositif d'aération selon la revendication 8 en liaison avec la revendication 2, **caractérisé en ce que**, dans le premier état de déplacement, l'écoulement d'air (13) est orienté en direction du centre de l'intérieur du véhicule (9) et, dans le second état de déplacement, l'écoulement d'air (14) est orienté en direction du pare-brise (11).

10. Dispositif d'aération selon l'une quelconque des revendications précédentes, **caractérisé en ce que** le premier, le second et/ou le troisième composants (1, 2) sont en plastique ou métal.

11. Partie d'habillage dotée d'un dispositif d'aération selon l'une quelconque des revendications précédentes.
